# EUROPÄISCHE PATENTSCHRIFT

(11) **EP 1 429 495 B1**
(45) Veröffentlichungstag und Bekanntmachung des Hinweises auf die Patenterteilung: **31.03.2010**
(21) Anmeldenummer: 03025461.9
(22) Anmeldetag: 27.10.2003
(51) Int. Cl.: H04L 12/28, H04L 12/66, H04L 29/06

(54) **Busfähige Anschluss- und Steuerungseinrichtung für einen dezentralen Einsatz in Niederspannungs-Verbraucheranlagen**
Decentralized control and connection device for coupling to a bus in low voltage consumer installations
Dispositif de commande et de connexion décentralisé de couplage de bus pour installation de consommateur à basse tension

(30) Priorität: 02.11.2002 DE 10251004
(43) Veröffentlichungstag der Anmeldung: 16.06.2004
(73) Patentinhaber: ABB AG, 68309 Mannheim (DE)
(72) Erfinder: Heilig, Peter, Dipl.-Ing., 69121 Heidelberg (DE); Kruse, Jörg, Dipl.-Ing., 68239 Manheim (DE)
(74) Vertreter: Miller, Toivo

(56) Entgegenhaltungen:
- WO-A-02/09350
- EURESCOM PARTICIPANTS: "Project P915 HINE-Heterogeneous Inhause networking Environment" INTERNET ARTICLE, [Online] Februar 2000 (2000-02), XP002239982 Berlin Gefunden im Internet: URL:http://ftp.eurescom.de/~pub-deliverabl es/p900-series/P915/D1/p915d1.pdf>
- "EIB Power Supply Units" 22. April 2002 (2002-04-22), , XP002259220 * das ganze Dokument *
- ABB: "Produkt-Handbuch ABB i-bus EIB EIB Spannungsversorgungen" INTERNET ARTICLE, [Online] - 1. November 2002 (2002-11-01) Seiten 1-31, XP000863953 Internet Gefunden im Internet: URL:http://library.abb.com/global/scot/sco t209.nsf/veritydisplay/b03a3fb5f2def427c12 56de5003419d3/$File/SVS_XX_PH_de_V1-0_2CDC 501002D0101.pdf> [gefunden am 2009-11-11]

## Beschreibung

Die Erfindung betrifft eine busfähige Einrichtung zum Anschließen und Steuern von elektrischen Verbrauchern für einen dezentralen Einsatz in Niederspannungs-Verbraucheranlagen, sowie die Weiterleitung von Meldesignalen über ein Bussystem, welches in der elektrischen Gebäudeinstallation zum Einsatz kommt und vorzugsweise als Europäischer Installationsbus (EIB), Local Operating Network (LON) oder Local Area Network mit TCPI/P- Protokoll (LAN), Interbus oder Local Contral Network (LCN) ausgebildet ist.

In dem Projekt-Dokument EURESCOM PARTICIPANTS:"project P915 HINE-Heterogeneous Inhouse networking environment" INTERNET ARTICLE, Februar 2000, XP002239982 Berlin, gefunden im Internet: URL: http://ftp.eurescom.de/pub-deliverables/p900-series/P915/D1/p915d1.pdf> ist auf Seite 51, in Abschnitt TIA TR 41.5, ein Gateway zur Verbindung eines internen Bussystems, beispielsweise eines PLC Networks, mit einem externen Bussystem, beispielsweise einem PC mit WAN oder dem Internet, gezeigt.

Die WO 02/09350 A2 zeigt eine Brücke in einem Heim-Netzwerk, die unterschiedliche Cluster von Geräten miteinander verbindet, wobei die Cluster verschiedene Software-Architekturen haben und die Brücke mit einem Internet-Server verbunden ist, der Informationen zu einem Set von unterschiedlichen Software-Standards anbietet und es der Brücke erlaubt, geeignete Übersetzungsmodule zu lokalisieren und herunterzuladen, um es einem Gerät aus einem ersten Cluster zu ermöglichen, mit einem Gerät aus einem zweiten Cluster zu interagieren.

Das Dokument XP2259220 zeigt ein Grundgäret, das eine busfühige Eirichtung zum Einsatz in der Gebäudeinstallation für die Weiterleitung von Meldesignalen beinhaltet und ist für die Aufnahme mehrerer, austauschbarer steckbarer Module eingerichtet.

Dezentrale Anschluss- und Steuerungseinrichtungen zur Steuerung von elektrischenVerbrauchern, wie sie in Installationssystemen eingesetzt werden und nachfolgendauch als anzusteuernde und Ioder ansteuernde elektrische Einrichtungen bezeichnetwerden, sind beispielsweise als EIB- Schaltgerätsserie der Firma Wieland Electric GmbH, Bamberg unter dem Systemnamen "gesis EIB V" bekannt und werden unter anderem für die Steuerung von Beleuchtungen und Jalousiemotoren eingesetzt.

Der Einsatz dieser Anschluss- und Steuerungseinrichtungen, ist dahingehend eingeschränkt, dass entweder die Funktionalität der Einrichtung vorgegeben und nicht änderbar ist oder die Bauform nicht den Anforderungen an die gegenwärtig verwendeten Unterflursysteme bzw. Zwischendeckenmontagen entspricht. Somit erweist sich eine flexible Anpassung an die unterschiedlichen Anwendungen der elektrischen Gebäudeinstallation, zu denen beispielsweise die Helligkeitsregelung von Beleuchtungen, die Ansteuerung thermischer Heizungsventile oder der Anschluss von Meldern der Sicherheitstechnik zählen, oft als schwierig.

Probleme ergeben sich weiterhin bei einer Funktionserweiterung innerhalb des Installationsbussystems der elektrischen Gebäudeinstallation, weil eine Realisierung neuer Funktionen nur über eine kostenintensive Entwicklung eines komplett neuen Gerätes, welches die erweiterten Funktionen aufweist oder durch den Einsatz zusätzlicher Geräte mit einem erhöhtem Installationsaufwand, durchführbar ist.

Weitere Nachteile der Anschluss- und Steuerungseinrichtungen entsprechend dem Stand der Technik sind darin zu sehen, dass die gegenwärtig vorhandenen Lösungen nicht oder nur mit einem hohen Installationsaufwand an andere Stecksysteme adaptierbar sind, eine konventionelle Anschlusstechnik für diese Einrichtungen nicht vorgesehen ist und auch Sicherheitsfunktionen, wie beispielsweise eine Überwachung und Meldung hinsichtlich interner Übertemperaturen über den Bus, fehlen.

Auch weisen diese Anschlusseinrichtungen keine manuellen Bedieneinrichtungen zur Vor-Ort-Bedienung und keine Vor-Ort-Anzeigen auf, wodurch die Installation und Fehlersuche wesentlich erschwert werden.

Der Erfindung liegt die Aufgabe zugrunde, eine busfähige Anschluss- und Steuerungseinrichtung für ein Installationsbussystem mit daran angeschlossenen anzusteuernden und /oder ansteuernden elektrischen Einrichtungen anzugeben, womit eine flexible Anpassung an unterschiedliche Anwendungen und Funktionen im Bereich der Gebäudeinstallation mit einem geringem Installationsaufwand realisierbar sind.

Diese Aufgabe wird durch eine busfähiges Anschluss- und Steuerungseinrichtung für ein Installationsbussystem mit daran angeschlossenen anzusteuernden und /oder ansteuernden elektrischen Einrichtungen mit den im Anspruch 1 angegebenen Merkmalen gelöst. Vorteilhafte Ausgestaltungen der Erfindung sind in weiteren Ansprüchen angegeben.

Eine erfindungsgemäße busfähige Anschluss- und Steuerungseinrichtung in einer Niederspannungs-Verbraucheranlage zum Anschließen und Steuern von elektrischen Einrichtungen für einen dezentralen Einsatz sowie für die Weiterleitung von Meldesignalen über ein Bussystem der elektrischen Gebäudeinstallation umfasst ein Grundgerät, mindestens einen Busanschluss zur Verbindung mit dem Bussystem, wobei das Grundgerät wenigstens einen ersten Anschluss zur Verbindung mit einem Niederspannungs-Versorgungsnetz aufweist, und wobei das Grundgerät für die Aufnahme mehrerer austauschbarer, steckbarer Module eingerichtet ist. Die Module weisen die Funktionen für die Steuerung der daran angeschlossenen elektrischen Einrichtungen und der Weiterleitung der Meldesignale von den elektrischen Einrichtungen zum Bussystem auf, und die austauschbaren, steckbaren Module weisen Anschlusselemente zum Anschluss der elektrischen Einrichtungen auf, wobei die Module verschiedene Funktionen für die Realisierung der erforderlichen Anwendungen in der elektrischen Gebäudeinstallation aufweisen. Das Grundgerät legt mittels integrierter Softwarefunktionen eine Gesamtfunktion der Einrichtung dahingehend fest, dass die Eigenschaften und die Zuordnung der Module durch eine Programmierung erfolgt. Die Generierung der internen Betriebsspannung der Anschluss- und Steuerungseinrichtung ist aus der Einspeisung aus dem Niederspannungs-Versorgungsnetz erreicht, und die Module weisen eine Verbindung mit der internen Versorgungsleitung des Grundgerätes auf.

Die Erfindung basiert auf einer Erweiterung der aus dem Stand der Technik bekannten Anschluss- und Steuerungseinrichtungen dahingehend, dass die erfindungsgemäße Einrichtung für die Aufnahme mehrerer austauschbarer Module eingerichtet wird, wobei die Module verschiedene Funktionen für die Realisierung der erforderlichen Anwendungen in der elektrischen Gebäudeinstallation aufweisen. Die Gesamtfunktion der erfindungsgemäßen Einrichtung wird somit durch die eingebrachten Module festgelegt.

Aus der modularen Bauweise der erfindungsgemäßen Einrichtung, beispielsweise durch die Verwendung steckbare Module, ergibt sich der Vorteil einer flexiblen Anpassung an die unterschiedlichen Anwendungen in der Gebäudeinstallation. Die Planung der Gebäudeinstallation wird dahingehend vereinfacht, dass auch eine Erweiterung durch zusätzliche Funktionen einfach durch das Einstecken neuer Module oder den Austausch der vorhandenen Module durchgeführt wird, was zu einer erheblichen Verringerung des Arbeitsaufwandes bei der Erweiterung der Gebäudeinstallation führt.

Durch die Ausgestaltung der Anschlüsse der erfindungsgemäßen Einrichtung mit einer konventionellen Klemmentechnik sind steckbare Installationssysteme problemlos adaptierbar.

Weitere vorteilhafte Weiterbildungen, welche sich aus dem Einsatzort der erfindungsgemäßen Einrichtung ergeben, sind die Auslegung der Einrichtung für eine maximale Einbautiefe von 50mm und die Verwendung eines spritzwassergeschützten Gehäuses.

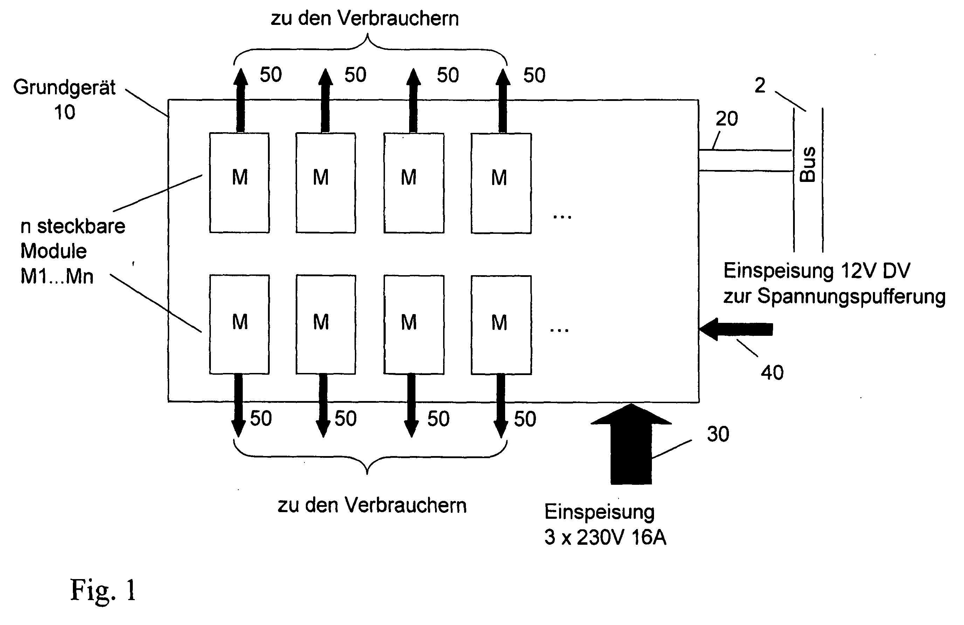

Eine weitere Beschreibung der Erfindung erfolgt anhand eines Ausführungsbeispieles, das in der **Fig.** 1 dargestellt ist.

Die **Fig.** 1 zeigt die erfindungsgemäße Anschluss- und Steuerungseinrichtung für daran anzuschließende anzusteuernde und /oder ansteuernde elektrischen Einrichtungen bzw. Verbraucher über einen Installationsbus 2, insbesondere über den EIB, Interbus, LON oder LCN, wobei die Verbindung mit dem Bus 2 über einen Busanschluss 20 verwirklicht wird.

Die Einrichtung weist dazu ein Gehäuse 10 auf, welches im Folgendem auch als Grundgerät bezeichnet wird, und ist mittels eines ersten Anschlusses 30 mit dem Niederspannungsnetz, vorzugsweise mit einer 3-phasigen Einspeisung von 3 x 230V, 16A verbunden.

Das Grundgerät 10 ist für die Aufnahme mehrerer austauschbarer Module M1, M2 bis Mn eingerichtet, welche die Funktionen für die Steuerung der daran angeschlossenen anzusteuernden und /oder ansteuernden elektrischen Einrichtungen aufweisen.

Der Anschluss der anzusteuernden und /oder ansteuernden elektrischen Einrichtungen an die Module M1, M2 bis Mn wird über an den Modulen M1, M2 bis Mn befindlichen Anschlusselementen 50 verwirklicht, welche ausgangsseitig vorzugsweise Schraub- oder Steckklemmen aufweisen, wodurch eine einfache Montage der Module M1, M2 bis Mn gewährleistet ist. Über vorkonfektionierte Adapter ist eine Anpassung an unterschiedliche Stecksysteme ohne einen zusätzlichen Montageaufwand möglich.

In einer bevorzugten Weiterbildung der erfindungsgemäßen Einrichtung ist ein weiterer Anschluss 40 zur Einspeisung einer Hilfsspannung vorgesehen, welcher beispielsweise für die Aufrechterhaltung des Betriebes der Einrichtung bei Ausfall der Versorgungsspannung oder als weitere Versorgungsspannung alternativ zur Einspeisung der Versorgungsspannung am Anschluss 30 eingerichtet ist.

Bei einer weiteren bevorzugten Ausführungsform der erfindungsgemäßen Einrichtung ist vorgesehen, dass das Grundgerät 10 eine automatische Überwachung der Versorgungs- und Hilfsspannungen sowie eine Weiterleitung der Meldesignale zur weiteren Verarbeitung über den Bus 2 aufweist.

Eine Generierung der internen Betriebsspannung der erfindungsgemäßen Einrichtung wird beispielsweise aus der 3-phasigen Einspeisung erreicht, wodurch die Funktion der erfindungsgemäßen Einrichtung auch bei Ausfall von bis zu 2 beliebigen Phasen der Versorgungsspannung gewährleistet ist.

Zusätzlich oder alternativ ist vorgesehen, dass die in das Grundgerät 10 eingebrachten Module M1, M2 bis Mn beim Einschalten der erfindungsgemäßen Einrichtung automatisch erkannt und einem Steckplatz zugeordnet werden sowie diese Information dem Installationsbussystem mitgeteilt wird.

Bei der Programmierung/Parametrierung des Grundgerätes 10 wird ebenfalls die Art des Moduls M1, M2 bis Mn pro Steckplatz festgelegt. Bei einer Abweichung dieser Informationen über die Art des Moduls M1, M2 bis Mn pro Steckplatz wird vom Grundgerät eine entsprechende Fehlermeldung generiert.

Weiterhin ist vorgesehen, das in den Modulen M1, M2 bis Mn Sicherheitsfunktionen integriert sind, welche beispielsweise eine Überwachung und Meldung hinsichtlich interner Übertemperaturen der erfindungsgemäßen Einrichtung über den Bus 2 verwirklichen und eine entsprechende Aktion wie das Abschalten von Verbrauchern realisieren.

In einer bevorzugten Weiterbildung der erfindungsgemäßen Anschluss- und Steuerungseinrichtung stellen die Module M1, M2 bis Mn eine galvanisch getrennte Hilfsspannung zum Anschluss verschiedener Sensoren zur Verfügung.

Die Module M1, M2 bis Mn der erfindungsgemäßen Einrichtung sind weiterhin dafür eingerichtet, mittels integrierter Softwarefunktionen eine Gesamtfunktion der Einrichtung dahingehend festzulegen, dass die Eigenschaften und die Zuordnung der Module M1, M2 bis Mn durch eine Programmierung erfolgt.

Insbesondere weist die erfindungsgemäße Einrichtung Mittel auf, welche die internen Funktionen, die nur innerhalb der Einrichtung verarbeitet werden, auch bei einem Busausfall sicherstellt.

Weiterhin ist vorgesehen die erfindungsgemäße Anschluss- und Steuerungseinrichtung mit einer Bedieneinrichtung auszustatten, um eine manuelle Eingriffsmöglichkeit für eine Vor-Ort-Bedienung und/ oder Vor-Ort-Anzeige zu gewährleisten, wobei die Funktion der Bedieneinrichtung auch ohne das Vorhandensein einer Busspannung gewährleistet ist.

Für die Statusanzeige, beispielsweise über das Vorhandensein der Versorgungsoder Hilfsspannungen, die Belegung der Steckplätze mit den Modulen M1, M2 bis Mn und/oder die Anzeige einer Übertemperatur der Einrichtung sind Mittel vorgesehen, welche vorzugsweise als Leuchtdioden ausgebildet sind.

Die Bedieneinrichtung und die Statusanzeige sind im Grundgerät 10 oder alternativ an den Modulen M1, M2 bis Mn angebracht.

## Patentansprüche

1. Busfähige Anschluss- und Steuerungseinrichtung in einer Niederspannungs-Verbraucheranlage zum Anschließen und Steuern von elektrischen Einrichtungen für einen dezentralen Einsatz sowie für die Weiterleitung von Meldesignalen über ein Bussystem der elektrischen Gebäudeinstallation, mit einem Grundgerät (10), mindestens einem Busanschluss (20) zur Verbindung mit dem Bussystem (2), wobei das Grundgerät (10) wenigstens einen ersten Anschluss (30) zur Verbindung mit einem Niederspannungs-Versorgungsnetz aufweist, das Grundgerät (10) für die Aufnahme mehrerer austauschbarer, steckbarer Module (M1, M2 bis Mn) eingerichtet ist, wobei die Module (M1, M2 bis Mn) die Funktionen für die Steuerung der daran angeschlossenen elektrischen Einrichtungen und der Weiterleitung der Meldesignale von den elektrischen Einrichtungen zum Bussystem (2) aufweisen, und die austauschbaren, steckbaren Module (M1, M2 bis Mn) Anschlusselemente (50) zum Anschluss der elektrischen Einrichtungen aufweisen, wobei die Module (M1, M2, bis Mn) verschiedene Funktionen für die Realisierung der erforderlichen Anwendungen in der elektrischen Gebäudeinstallation aufweisen,
**dadurch gekennzeichnet:**
**daß** das Grundgerät mittels integrierter Softwarefunktionen eine Gesamtfunktion der Einrichtung dahingehend festlegt, dass die Eigenschaften und die Zuordnung der Module (M1, M2 bis Mn) durch eine Programmierung erfolgt, und wobei die Generierung der internen Betriebsspannung der Anschluss- und Steuerungseinrichtung aus der Einspeisung aus dem Niederspannungs-Versorgungsnetz erreicht ist, und wobei die Module eine Verbindung mit der internen Versorgungsleitung des Grundgerätes aufweisen.

2. Einrichtung nach Anspruch 1, **dadurch gekennzeichnet, dass** das Grundgerät (10) dafür eingerichtet ist, Module (M1, M2 bis Mn) unterschiedlicher Funktionalität aufzunehmen.

3. Einrichtung nach Anspruch 1 oder 2, **dadurch gekennzeichnet, dass** durch Einbringen neuer Module (M1, M2 bis Mn) oder dem Austausch vorhandener Module (M1, M2 bis Mn) eine Funktionserweiterung oder eine Funktionsänderung bewirkbar ist.

4. Einrichtung nach einem der vorherigen Ansprüche, **dadurch gekennzeichnet, dass** das Grundgerät (10), einen weiteren Anschluss (40) zur Einspeisung einer Hilfsspannung aufweist.

5. Einrichtung nach einem der vorherigen Ansprüche, **dadurch gekennzeichnet, dass** das Grundgerät (10) eine automatische Überwachung der Versorgungs- und Hilfsspannungen sowie eine Weiterleitung der Meldesignale zur weiteren Verarbeitung über den Bus (2) aufweist.

6. Einrichtung nach einem der vorherigen Ansprüche, **dadurch gekennzeichnet, dass** die Überwachungsmodule eine Verbindung mit den internen Steuerleitungen des Grundgerätes (10) aufweisen.

7. Einrichtung nach einem der vorherigen Ansprüche, **dadurch gekennzeichnet, dass** das Grundgerät (10) eingesteckte Module (M1, M2 bis Mn) automatisch erkennt, einem Steckplatz zuordnet und diese Information dem Installationsbussystem mitteilt.

8. Einrichtung nach einem der vorherigen Ansprüche, **dadurch gekennzeichnet, dass** die Einrichtung Mittel aufweist, welche die internen Funktionen, die innerhalb der Einrichtung verarbeitet werden, auch bei einem Busausfall sicherstellt.

9. Einrichtung nach einem der vorherigen Ansprüche, **dadurch gekennzeichnet, dass** die Einrichtung eine Statusanzeige zur Anzeige des Vorhandenseins der Versorgungs- oder Hilfsspannungen, der Belegung der Steckplätze mit den Modulen (M1, M2 bis Mn) und/oder der Anzeige einer Übertemperatur der Einrichtung aufweist.

10. Einrichtung nach einem der vorherigen Ansprüche, **dadurch gekennzeichnet, dass** die Einrichtung eine Bedieneinrichtung für manuelle Eingriffsmöglichkeiten für eine Vor-Ort-Bedienung und/oder Vor-Ort-Anzeige aufweist.

11. Einrichtung nach Anspruch 10 **dadurch gekennzeichnet, dass** die Funktion der Bedieneinrichtung auch ohne das Vorhandensein einer Busspannung gewährleistet ist.

12. Einrichtung nach einem der Ansprüche 9 bis 11 **dadurch gekennzeichnet, dass** Bedieneinrichtung und Statusanzeige im Grundgerät (10) oder an den Modulen (M1, M2 bis Mn) angeordnet sind.

13. Einrichtung nach einem der vorherigen Ansprüche, **dadurch gekennzeichnet, dass** durch die Module (M1, M2 bis Mn) eine Verbindung zum Niederspannungsnetz verwirklicht ist.

14. Einrichtung nach einem der vorherigen Ansprüche, **dadurch gekennzeichnet, dass** die Module (M1, M2 bis Mn) einen Anschluss für eine Hilfsspannung zum Anschließen von Sensoren aufweisen.

15. Einrichtung nach einem der vorherigen Ansprüche, **dadurch gekennzeichnet, dass** die Anschlusselemente (50) der Module (M1, M2 bis Mn) ausgangsseitig Schraub- oder Steckverbindungen für vorkonfigurierte Adapter aufweisen.

16. Einrichtung nach einem der vorherigen Ansprüche, **dadurch gekennzeichnet**, die Anschlüsse (30), (40), (50) und die Anschlusselemente (50) für eine konventionelle Klemmentechnik ausgelegt sind.

17. Einrichtung nach einem der vorherigen Ansprüche, **dadurch gekennzeichnet, dass** die Einrichtung Mittel für eine interne Überwachung der Spannungsversorgung und der Innentemperatur des Systems aufweist.

18. Einrichtung nach einem der vorherigen Ansprüche, **dadurch gekennzeichnet, dass** das Grundgerät (10) ein spritzwassergeschütztes Gehäuse ist und/ oder für eine maximale Einbautiefe von 50mm ausgestaltet ist.

## Claims

1. A bus-compatible connection and control device in a low-voltage consumer installation for connecting and controlling electric devices for decentralized use and for transferring status signals via a bus system of the electric building installation, comprising a basic unit (10), at least one bus connection (20) for connection with the bus system (2), with the basic unit (10) comprising at least one first connection (30) for connection with a low-voltage supply network, the basic unit (10) being set up for receiving several exchangeable pluggable modules (M1, M2 to Mn), with the modules (M1, M2 to Mn) having the functions for the control of the electric devices connected thereto and transferring the status signals from the electric devices to the bus system (2), and the exchangeable pluggable modules (M1, M2 to Mn) having connection elements (50) for the connection of the electric devices, with the modules (M1, M2 to Mn) having different functions for realizing the required applications in the electric building installation, **characterized in that** the basic unit determines an overall function of the device by means of integrated software functions in the respect that the properties and the assignment of the modules (M1, M2 to Mn) occurs by programming and the generation of the internal operating voltage of the connection and control device is achieved by supply from the low-voltage supply network, and the modules have a connection with the internal supply line of the basic unit.

2. A device according to claim 1, **characterized in that** the basic unit (10) is set up to accommodate modules (M1, M2 to Mn) of different functionality.

3. A device according to claim 1 or 2, **characterized in that** an expansion of functions or a change of functions can be achieved by introducing new modules (M1, M2 to Mn) or the exchange of existing modules (M1, M2 to Mn).

4. A device according to one of the preceding claims, **characterized in that** the basic unit (10) comprises a further connection (40) for supplying an auxiliary voltage.

5. A device according to one of the preceding claims, **characterized in that** the basic unit (10) has automatic monitoring of the supply and auxiliary voltages and transfer of status signals for further processing via the bus (2).

6. A device according to one of the preceding claims, **characterized in that** the monitoring modules have a connection with the internal control lines of the basic unit (10).

7. A device according to one of the preceding claims, **characterized in that** the basic unit (10) automatically recognizes inserted modules (M1, M2 to Mn), associates them with a slot and provides this information to the installation bus system.

8. A device according to one of the preceding claims, **characterized in that** the device comprises means which ensure the internal functions even in the case of a bus failure, which functions are processed within the device.

9. A device according to one of the preceding claims, **characterized in that** the device comprises a status display for displaying the presence of the supply or auxiliary voltages, the occupancy of the slots with the modules (M1, M2 to Mn) and/or the display of an excessive temperature of the device.

10. A device according to one of the preceding claims, **characterized in that** the device comprises an operator control device for possibilities of manual intervention for on-site operator control and/or on-site display.

11. A device according to claim 10, **characterized in that** the function of the operator control device is ensured even without the presence of a bus voltage.

12. A device according to one of the claims, **characterized in that** the operator control device and the status display are arranged in the basic unit (10) or on the modules (M1, M2 to Mn).

13. A device according to one of the preceding claims, **characterized in that** a connection to the low-voltage network is realized by the modules (M1, M2 to Mn).

14. A device according to one of the preceding claims, **characterized in that** the modules (M1, M2 to Mn) have a connection for an auxiliary voltage for connecting sensors.

15. A device according to one of the preceding claims, **characterized in that** the connection elements (50) of the modules (M1, M2 to Mn) have bolted or plug-in connections for pre-configured adapters on the output side.

16. A device according to one of the preceding claims, **characterized in that** the connections (30), (40), (50) and the connection elements (50) are arranged for conventional terminal technology.

17. A device according to one of the preceding claims, **characterized in that** the device comprises means for internal monitoring of the voltage supply and the inside temperature of the system.

18. A device according to one of the preceding claims, **characterized in that** the basic unit (10) is a splash-proof housing and/or arranged for a maximum installation depth of 50 mm.

## Revendications

1. Dispositif de raccordement et de commande compatible avec un bus dans une installation de consommateurs basse tension, pour le raccordement et la commande d'installations électriques en vue d'une utilisation décentralisées et pour la transmission de signaux de notification sur un système de bus de l'installation électrique du bâtiment, avec un appareil de base (10), au moins un raccordement au bus (20) pour la connexion avec le système de bus (2), l'appareil de base (10) comprenant au moins un premier raccordement (30) pour la connexion à un réseau d'alimentation basse tension, l'appareil de base (10) étant équipé pour recevoir plusieurs modules enfichables interchangeables (M1, M2 à Mn), lesquels modules (M1, M2 à Mn) possèdent les fonctions pour la commande des installations électriques qui leur sont connectées et la transmission de signaux de notification des installations électriques au système de bus (2), les modules enfichables interchangeables (M1, M2 à Mn) présentant des éléments de raccordement (50) pour le raccordement des installations électriques, les modules (M1, M2, à Mn) possédant différentes fonctions pour la réalisation des applications nécessaires de l'installation électrique du bâtiment, **caractérisé en ce que** l'appareil de base détermine au moyen de fonctions logicielles intégrées une fonction d'ensemble pour l'installation de telle façon que les propriétés et l'affectation des modules (M1, M2 à Mn) soient définies par une programmation, la génération de la tension de fonctionnement interne du dispositif de raccordement et de commande étant réalisée par l'alimentation à partir du réseau d'alimentation basse tension, et les modules présentant une connexion avec la ligne d'alimentation interne de l'appareil de base.

2. Dispositif selon la revendication 1, **caractérisé en ce que** l'appareil de base (10) est équipé pour recevoir des modules (M1, M2 à Mn) ayant des fonctionnalités différentes.

3. Dispositif selon la revendication 1 ou 2, **caractérisé en ce que** les fonctions peuvent être modifiées par l'introduction de nouveaux modules (M1, M2 à Mn) ou le remplacement de modules (M1, M2 à Mn) existants.

4. Dispositif selon l'une des revendications précédentes, **caractérisé en ce que** l'appareil de base (10) présente un autre raccordement (40) pour l'apport d'une tension auxiliaire.

5. Dispositif selon l'une des revendications précédentes, **caractérisé en ce que** l'appareil de base (10) présente une surveillance automatique des tensions d'alimentation et auxiliaire ainsi qu'une transmission des signaux de notification vers leur traitement en passant par le bus (2).

6. Dispositif selon l'une des revendications précédentes, **caractérisé en ce que** les modules de surveillance présentent une connexion avec les lignes de commande de l'appareil de base (10).

7. Dispositif selon l'une des revendications précédentes, **caractérisé en ce que** l'appareil de base (10) reconnaît automatiquement les modules (M1, M2 à Mn) enfichés, les affecte à un emplacement de connexion et communique ces informations au système de bus d'installation.

8. Dispositif selon l'une des revendications précédentes, **caractérisé en ce que** le dispositif présente des moyens qui assurent les fonctions internes exécutées dans le dispositif, même en cas de panne du bus.

9. Dispositif selon l'une des revendications précédentes, **caractérisé en ce que** le dispositif présente un affichage d'état destiné à afficher la présence de la tension d'alimentation ou auxiliaire, l'affectation des emplacements de branchement aux modules (M1, M2 à Mn) et/ou l'indication d'une surchauffe du dispositif.

10. Dispositif selon l'une des revendications précédentes, **caractérisé en ce que** le dispositif présente un dispositif de commande pour des possibilités d'intervention manuelle pour une commande locale ou un affichage local.

11. Dispositif selon la revendication 10, **caractérisé en ce que** le fonctionnement du dispositif de commande est garanti même en l'absence de la tension du bus.

12. Dispositif selon l'une des revendications 9 à 11, **caractérisé en ce que** le dispositif de commande et l'affichage de l'état sont disposés sur l'appareil de base (10) ou sur les modules (M1, M2 à Mn).

13. Dispositif selon l'une des revendications précédentes, **caractérisé en ce que** les modules (M1, M2 à Mn) réalisent une connexion au réseau basse tension.

14. Dispositif selon l'une des revendications précédentes, **caractérisé en ce que** les modules (M1, M2 à Mn) présentent un branchement pour une tension auxiliaire en vue du branchement de capteurs.

15. Dispositif selon l'une des revendications précédentes, **caractérisé en ce que** les éléments de branchement (50) des modules (M1, M2 à Mn) présentent du côté de la sortie des connexions vissées ou enfichées pour des adaptateurs préconfigurés.

16. Dispositif selon l'une des revendications précédentes, **caractérisé en ce que** les branchements (30), (40), (50) et les éléments de branchement (50) sont conçus pour une technologie de bornes conventionnelle.

17. Dispositif selon l'une des revendications précédentes, **caractérisé en ce que** le dispositif présente des moyens pour une surveillance interne de l'alimentation en tension et de la température intérieure du système.

18. Dispositif selon l'une des revendications précédentes, **caractérisé en ce que** l'appareil de base (10) est un boîtier protégé contre les projections d'eau et/ou est conçu pour une profondeur d'installation maximale de 50 mm.
